(19) Europäisches Patentamt
European Patent Office
Office européen des brevets

(11) **EP 1 892 820 B1**

(12) **EUROPÄISCHE PATENTSCHRIFT**

(45) Veröffentlichungstag und Bekanntmachung des Hinweises auf die Patenterteilung:
**28.07.2010 Patentblatt 2010/30**

(51) Int Cl.:
*H02M 1/32* *(2007.01)*      *H02M 5/458* *(2006.01)*

(21) Anmeldenummer: **07023384.6**

(22) Anmeldetag: **21.06.2005**

(54) **Verfahren zur Ermittlung des Risikos für einen störungsfreien Betrieb eines Frequenzumrichters**

Method for determining a characteristic for the quality of a network supplying a frequency converter

Procédé destiné à calculer le rapport pour la qualité d'un réseau culinaire à commutateur de fréquence

(84) Benannte Vertragsstaaten:
**DE FR GB**

(30) Priorität: **24.06.2004 DE 102004030536**

(43) Veröffentlichungstag der Anmeldung:
**27.02.2008 Patentblatt 2008/09**

(62) Dokumentnummer(n) der früheren Anmeldung(en) nach Art. 76 EPÜ:
**05773948.4 / 1 759 448**

(73) Patentinhaber: **SIEMENS AKTIENGESELLSCHAFT**
**80333 München (DE)**

(72) Erfinder: **Schierling, Hubert, Dr.**
**91052 Erlangen (DE)**

(56) Entgegenhaltungen:
**EP-A- 0 370 500       DE-A1- 19 924 550**
**US-A1- 2005 258 795**

• **BARROS J ET AL: "Measurement and analysis of voltage events in a low-voltage distribution network" ELECTROTECHNICAL CONFERENCE, 2004. MELECON 2004. PROCEEDINGS OF THE 12TH IEEE MEDITERRANEAN DUBROVNIK, CROATIA 12-15 MAY 2004, PISCATAWAY, NJ, USA,IEEE, US, 12. Mai 2004 (2004-05-12), Seiten 1083-1086, XP010734918 ISBN: 0-7803-8271-4**

• **DURAN GOMEZ J L ET AL: "A low cost approach to improve the performance of an adjustable speed drive (ASD) under voltage sags and short-term power interruptions" 12. Oktober 1998 (1998-10-12), POWER ELECTRONICS CONGRESS, 1998. CIEP 98. VI IEEE INTERNATIONAL MORELIA, MEXICO 12-15 OCT. 1998, PISCATAWAY, NJ, USA,IEEE, US, PAGE(S) 16-21 , XP010324595 ISBN: 0-7803-5006-5 * das ganze Dokument ***

• **MONTANO J C ET AL: "Power quality factor and line-disturbances measurements in three-phase systems" POWER ELECTRONICS SPECIALISTS CONFERENCE, 2004. PESC 04. 2004 IEEE 35TH ANNUAL AACHEN, GERMANY 20-25 JUNE 2004, PISCATAWAY, NJ, USA,IEEE, US, 20. Juni 2004 (2004-06-20), Seiten 4084-4088, XP010739396 ISBN: 0-7803-8399-0**

**Beschreibung**

Die Erfindung bezieht sich auf ein Verfahren zur Ermittlung einer Kennziffer für die Qualität eines einen Frequenzumrichter speisenden Netzes.

Bei Frequenzumrichtern, insbesondere bei solchen, bei denen Diodengleichrichter zur Speisung eines Gleichspannungs-Zwichenkreises eingesetzt werden, können Fehler im speisenden Netz zu Störabschaltungen und sogar zur Zerstörung des Frequenzumrichters führen.

Beispielsweise verursachen Spannungseinbrüche im speisenden Netz des Frequenzumrichters Drehmomenteinbrüche an vom Frequenzumrichter gespeisten Motor. Kehrt die Netzspannung anschließend mit großer Steilheit wieder, kann es zu Überspannungen im Gleichspannungs-Zwischenkreis des Frequenzumrichters oder zu motorseitigen Überströmen kommen. Die Gleichrichterdioden des netzseitigen Stromrichters des Frequenzumrichters werden durch ein schnelles Wiederaufladen des Zwischenkreiskondensators des Frequenzumrichters stark belastet. Treten Spannungseinbrüche mit anschließender Spannungswiederkehr mit großer Steilheit mehrfach hintereinander auf, so werden die Gleichrichterdioden infolge überhöhter Temperatur zerstört, womit der Frequenzumrichter ausfällt. Sehr hohe Netzspannungen können zu Überspannungsabschaltung oder zur Zerstörung des Frequenzumrichters führen.

Bisher schaltet ein an einem speisenden Netz angeschlossener Frequenzumrichter ab, wenn ein zulässiger oberer bzw. unterer Grenzwert für die Zwischenkreisspannung des Frequenzumrichters über- bzw. unterschritten wird oder der Motorstrom zu groß wird. Bei manchen im Handel erhältlichen Frequenzumrichtern wird zusätzlich der Ausfall einer Netzphase des speisenden Netzes erkannt und als Abschaltkriterium herangezogen.

Da es für die Störmeldungen "Überspannung" und "Überstrom" viele Ursachen geben kann und der Fehler in aller Regel nicht unmittelbar reproduzierbar ist, wird die Netzspannung des speisenden Netzes als Auslöser für eine Abschaltung des Frequenzumrichters nur schwer erkannt. Wenn ein Frequenzumrichter mehrfach mit einer Störmeldung "Überspannung" bzw. "Überstrom" ausgefallen ist, für die es keine applikations- oder gerätespezifische Erklärung gibt, wird vom Service-Ingenieur die Netzspannung des speisenden Netzes mittels eines Schreibers, insbesondere eines Langzeitschreibers, aufgezeichnet und anschließend ausgewertet. Ein Beispiel solcher Überwachung ist in der DE 199 24 550 A1 zu finden.

Da ein nicht stabiles Netz immer ein Risiko für den sicheren Betrieb eines Frequenzumrichters und damit für eine Anlage darstellt, wäre es für einen Betreiber einer Anlage mit frequenzumrichtergespeisten Motoren sehr hilfreich, wenn jeder Frequenzumrichter die Qualität seines speisenden Netzes feststellen und bei Erreichen eines Gefährdungspotentials eine entsprechende Meldung abgeben könnte. Dadurch könnten unter Umständen kostenintensive Betriebsunterbrechungen verhindert werden.

Der Erfindung liegt nun die Aufgabe zugrunde, ein Verfahren anzugeben, mit dem eine Kennziffer für die Qualität eines einen Frequenzumrichter speisenden Netzes ermittelt werden kann.

Diese Aufgabe wird erfindungsgemäß mit den Merkmalen des Anspruchs 1 gelöst.

Erfindungsgemäß werden die fortlaufend gemessene Zwischenkreisspannung und der fortlaufend ermittelte netzseitige Zwischenkreisstrom, der in Abhängigkeit der Zwischenkreisspannung, eines motorseitigen Zwischenkreisstromes und einer Zwischenkreiskapazität berechnet wird, jeweils nicht linear gewichtet und integriert. Solches Datenverarbeitungsverfahren wird beispielweise in einem Fernsehempfänger eingesetzt (EP-A-0 370 500). Diese aufbereiteten Messgrößen werden zu einer Kennzahl aufaddiert, die in eine Kennziffer umgerechnet wird. Diese Kennziffer gibt das Risiko für einen störungsbehafteten Betrieb eines Frequenzumrichters an einen speisenden Netzes an.

Eine Netzunterspannung wird anhand der gemessenen Zwischenkreisspannung erkannt, eine Netzüberspannung anhand der gemessenen Zwischenkreisspannung und einem positiven netzseitigen Zwischenkreisstrom. Zur Identifizierung eines Netzüberstromes dient der netzseitige Zwischenkreisstrom.

Vorteilhafterweise kann auch eine Warnmeldung generiert werden, so bald die ermittelte Kennziffer einen vorbestimmten Wert unterschreitet.

Mit diesem erfindungsgemäßen Verfahren wird die Gefahr von Gerätestörungen oder -ausfällen infolge von Netzstörungen erkannt, noch bevor es zu einer Betriebsunterbrechung kommt. Dadurch wird die Anzahl der Ausfälle eines an einem Netz angeschlossenen Frequenzumrichters mit den damit verbundenen Nachteilen wie Kosten und Imageverlust reduziert. Störungen aufgrund von Netzfehlern werden somit schneller gefunden. Mit diesem erfindungsgemäßen Verfahren ist ein Frequenzumrichter in der Lage, das Risiko für den gestörten Betrieb des Antriebs (Frequenzumrichter mit angeschlossenen Motor) ständig während des laufenden Betriebes zu ermitteln und gegebenenfalls anzuzeigen.

Zur weiteren Erläuterung der Erfindung wird auf die Zeichnung Bezug genommen, in der das erfindungsgemäße Verfahren schematisch veranschaulicht ist.

FIG 1    zeigt einen Frequenzumrichter mit Diodeneinspeisung an einem speisenden Netz, die

FIG 2    veranschaulicht eine analoge Verarbeitungseinrichtung mehrerer Messgrößen zu einer Kennzahl, wobei in der

FIG 3    in einem Diagramm eine nichtlineare Gewichtungsfunktion dargestellt ist, in der

FIG 4    ist ein Frequenzumrichter mit einem Activ-Front-End dargestellt, wobei die

FIG 5    einen Frequenzumrichter mit einem mit Netzfrequenz getakteten netzseitigen rückspeisefähigen Stromrichter zeigt, und in der

FIG 6    ist ein Matrixumrichter dargestellt.

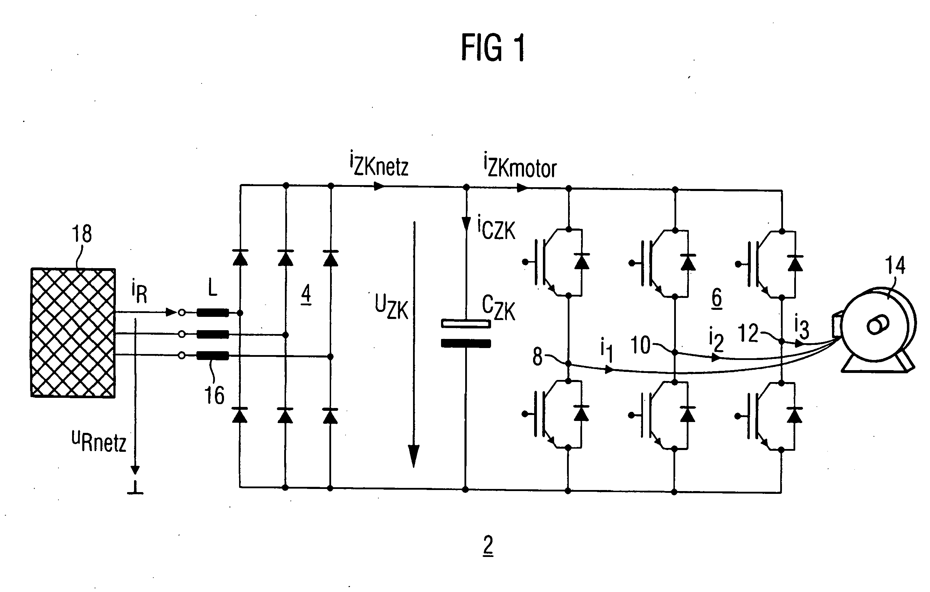

Die FIG 1 zeigt ein Ersatzschaltbild eines Frequenzumrichters 2, der als netzseitigen Stromrichter einen Diodengleichrichter 4 und als lastseitigen Stromrichter einen selbstgeführten Pulsstromrichter 6 aufweist. Beide Stromrichter sind gleichspannungsseitig mittels eines Gleichspannungs-Zwischenkreises elektrisch miteinander verknüpft. Dieser Gleichspannungs-Zwischenkreis weist einen Zwischenkreiskondensator $C_{ZK}$ auf, an dem eine Zwischenkreisspannung $U_{ZK}$ abfällt. An den Phasen-Ausgängen 8, 10 und 12 des selbstgeführten Pulsstromrichters 6 ist ein Motor 14 angeschlossen. Motor 14 und Frequenzumrichter 2 bilden einen sogenannten Antrieb. Eingangsseitig weist dieser Frequenzumrichter 2 eine Netzkommutierungsdrossel 16, die für jede Netzphase eine Induktivität L beinhaltet, auf. Mittels dieser Netzkommutierungsdrossel 16 ist dieser Frequenzumrichter 2 an ein speisendes Netz 18 angeschlossen.

Der Diodengleichrichter 4 generiert aus den anstehenden Phasenspannungen $u_{Rnetz}$, $u_{Snetz}$, und $u_{Tnetz}$ des speisenden Netzes 18 eine gleichgerichtete Spannung, die Zwischenkreisspannung $U_{ZK}$, die mittels des Zwischenkreiskondensators $C_{ZK}$ gepuffert wird. Außerdem liefert dieser Diodengleichrichter 4 einen Zwischenkreisstrom $i_{zknetz}$, der sich aus den Phasenströmen $i_R$, $i_S$ und $i_T$ des speisenden Netzes 18 zusammensetzt. Dieser netzseitige Zwischenkreisstrom $i_{zKnetz}$ teilt sich in einen Ladestrom $i_{CZK}$ des Zwischenkreiskondensators $C_{ZK}$ und einen lastseitigen Zwischenkreisstromes $i_{ZKmotor}$ auf. Aus Übersichtlichkeitsgründen sind von den Phasenspannungen $u_{Rnetz}$, $u_{Snetz}$ und $u_{Tnetz}$ und den Phasenströmen $i_R$, $i_S$ und $i_T$ nur die der Phase R dargestellt.

Da der Wert der Zwischenkreisspannung $U_{ZK}$ direkt von der Amplitude der Netzspannung abhängig ist, macht sich ein Spannungseinbruch direkt in der Zwischenkreisspannung $U_{ZK}$ bemerkbar. Unterschreitet die Amplitude der Zwischenkreisspannung $U_{ZK}$ einen unteren vorbestimmten Wert, so schaltet der Frequenzumrichter 2 ab. Steigt nach einem Spannungseinbruch die Netzspannung wieder auf ihren ursprünglichen Wert, so fließt ein erhöhter netzseitiger Zwischenkreisstrom $i_{ZKnetz}$. Je steiler der Spannungsanstieg ist, um so höher ist der netzseitige Zwischenkreisstrom $i_{ZKnetz}$. D.h., die Qualität des speisenden Netzes 18 bestimmt somit das Risiko für einen störungsfreien Betrieb des Frequenzumrichters 2. Je mehr Spannungseinbrüche und Netzüberströme auftreten, um so niedriger ist die Qualität des speisenden Netzes 18. Je niedriger die Qualität des speisenden Netzes 18 des Frequenzumrichters 2 ist, um so höher ist das Risiko für einen störungsfreien Betrieb des Frequenzumrichters 2. Somit hat die Qualität eines Netzes 18 einen wesentlichen Einfluss auf den störungsfreien Betrieb eines Frequenzumrichters 2 und damit eines Antriebs.

Für Regelungs- und Schutzzwecke werden die Zwischenkreisspannung $U_{ZK}$ und die Motorströme $i_1$, $i_2$ und $i_3$ gemessen. Ohne weitere Messgrößen gelangt man mit Hilfe von Gleichungen zum motorseitigen und netzseitigen Zwischenkreisstrom $i_{ZKmotor}$ und $i_{ZKnetz}$. Mit Hilfe dieser gemessenen Motorströme $i_1$, $i_2$ und $i_3$ und den Ausgangsspannungen des selbstgeführten Pulsstromrichters 6 wird die Motorleistung gemäß folgender Gleichung:

$$P_{motor} = u_1 \cdot i_1 + u_2 \cdot i_2 + u_3 \cdot i_3 \qquad (1)$$

berechnet. Diese Ausgangsspannung $u_1$, $u_2$ und $u_3$ des Frequenzumrichters 2 brauchen nicht gemessen zu werden, da die Regeleinrichtung des Frequenzumrichters 2 die Sollwerte dieser Ausgangsspannungen liefert. In Abhängigkeit dieser berechneten Motorleistung $P_{motor}$ und der gemessenen Zwischenkreisspannung $U_{ZK}$ gelangt man mittels folgender Gleichung:

$$i_{ZKmotor} = P_{motor}/U_{ZK} \qquad (2)$$

zum Wert des motorseitigen Zwischenkreisstromes $i_{zKmotor}$. Der netzseitige Zwischenkreisstrom $i_{zKnetz}$ ergibt sich aus der Knotenregel zu:

$$i_{ZKnetz} = i_{CZK} + i_{zKmotor} \qquad (3)$$

wobei der Ladestrom $i_{czK}$ gemäß folgender Gleichung:

$$i_{CZK} = C_{zk} \cdot dU_{ZK}/dt \qquad\qquad (4)$$

berechnet wird. Somit erhält man aus vorhandenen Messgrößen mit einigen einfachen Rechenoperationen zwei Messgrößen, die hinsichtlich Netzstörungen des speisenden Netzes 18 ausgewertet werden können. Die vorhandenen Messgrößen $U_{ZK}$ und $i_1$, $i_2$ und $i_3$ und $u_1$, $u_2$ und $u_3$ stehen zu jeden Abtastschritt während des gesamten Betriebes zur Verfügung.

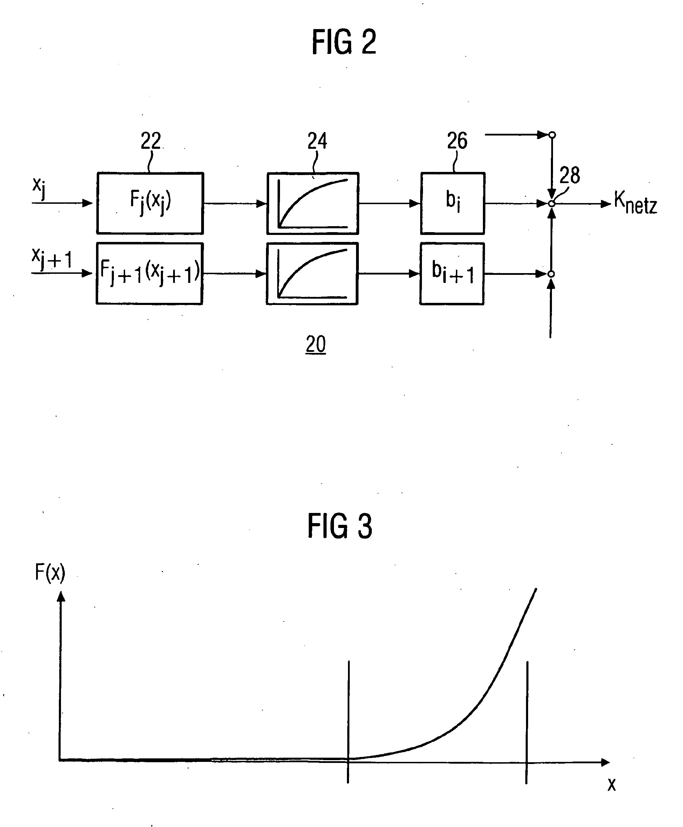

In der FIG 2 ist eine analoge Verarbeitungseinrichtung 20 mehrerer Messgrößen zu einer Kennzahl $K_{netz}$ schematisch dargestellt. Diese Verarbeitungseinrichtung 20 weist pro Messgröße einen Kanal, bestehend aus einem Funktionsglied 22, einem einen Integrator enthaltenden Speicherglied 24 und einer Gewichtungseinrichtung 26, auf. Ausgangsseitig sind diese Verarbeitungskanäle mit wenigstens einem Addierer 28 miteinander verknüpft. Am Ausgang dieses Addierers 28 steht die Kennzahl $K_{netz}$ an. Am Eingang eines jeden Verarbeitungskanals steht eine Messgröße $X_j$, $X_{j+1}$ an. Im Funktionsglied 22 ist eine Funktion $F(X)$ für eine nichtlineare Gewichtung einer Messgröße $X_j$, $X_{j+1}$ hinterlegt. Eine derartige Funktion $F(X)$ ist beispielsweise in dem Diagramm der FIG 3 näher veranschaulicht. Ausgangsseitig ist das Funktionsglied 22 mit einem Eingang des nachgeschalteten einen Integrator enthaltenden Speichergliedes 24 verknüpft, dessen Ausgang mit der Gewichtungseinrichtung 26 verknüpft ist.

Je kleiner diese Kennzahl $K_{netz}$ ist, umso höher ist die Qualität des speisenden Netzes 18. Diese Kennzahl $K_{netz}$ kann in eine Kennziffer umgerechnet werden, die die Qualität des speisenden Netzes 18 wiedergibt. Beispielsweise kann der Kehrwert der Kennzahl $K_{netz}$ gebildet werden, oder diese Kennzahl $K_{netz}$ von einer Konstanten abgezogen werden. In beiden Fällen ist die Kennziffer für eine hohe Qualität hoch und für eine geringe Qualität niedrig. Mit Verringerung der Kennziffer ausgehend vom Maximum steigt das Risiko für einen störungsbehafteten Betrieb des Frequenzumrichters 2.

In Abhängigkeit der ermittelten Kennzahl $K_{netz}$ bzw. der umgerechneten Kennziffer kann bei Überschreiten bzw. Unterschreiten einer vorbestimmten Kennzahl $K_{netz}$ bzw. Kennziffer eine Warnung ausgegeben werden.

Dieses erfindungsgemäße Verfahren lässt sich auch auf andere Umrichtertopologien übertragen.

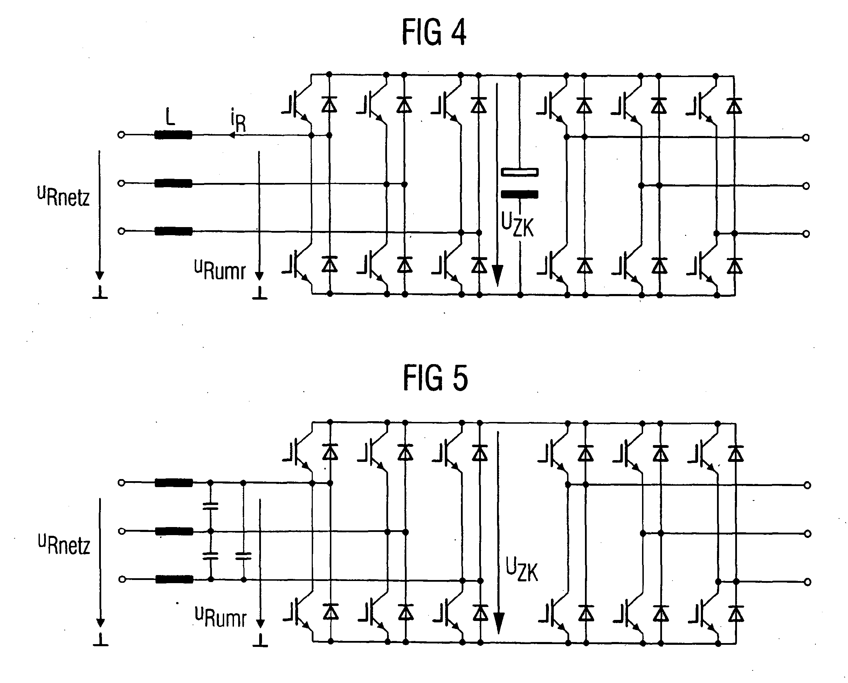

Die FIG 4 zeigt einen Frequenzumrichter mit einem Activ-Front-End (AFE). Dieses AFE ist ein selbstgeführter Pulsstromrichter. Somit weist ein derartiger Frequenzumrichter netz- und lastseitig jeweils einen selbstgeführten Pulsstromrichter auf. Beim AFE ist die Qualität der Netzspannung nicht von so entscheidender Bedeutung, da die Zwischenkreisspannung $U_{ZK}$ so hoch ist, dass der netzseitige Pulsstromrichter in der Funktion Gleichrichter steuerbar bleibt und Netzfehler in der Regel beherrscht werden können. Netzfehler, beispielsweise Unterspannungen bis zu sehr tiefen Werten und sehr steile Netzspannungsänderungen, beeinträchtigen jedoch auch beim AFE den sicheren Betrieb. Für die Regelung des AFE wird der Netzstrom gemessen. Für die Analyse des speisenden Netzes kann der Betrag des gebildeten Netzstromzeigers dienen. Häufig wird sogar für die Regelung des AFE die Netzspannung direkt gemessen. Ist dies nicht der Fall, kann diese mittels folgender Gleichung:

$$u_{Rnetz} = u_{Rumr} - L \cdot di_R/dt \qquad\qquad (6)$$

berechnet werden. Dabei sind $u_{Rnetz}$ die Netzspannung der Phase R, $u_{Rumr}$ die aus der Zwischenkreisspannung $U_{ZK}$ und einem Pulsmuster bestimmte Umrichter-Eingangsspannung der Phase R, L die Induktivität der AFE-Drossel und $i_R$ der gemessene Ausgangsstrom des AFE. Für die anderen Phasen S und T wird entsprechend verfahren. Aus diesen berechneten Netzspannungen $U_{Rnetz}$, $U_{Snetz}$ und $U_{Tnetz}$ wird in bekannter Weise der Netzspannungszeiger berechnet. Diese Netzgrößen werden dann erfindungsgemäß ausgewertet.

Die FIG 5 zeigt eine weitere Umrichtertopologie. Bei dieser Umrichtertopologie ist als netzseitiger Stromrichter ein mit Netzfrequenz getakteter steuerbarer Stromrichter vorgesehen. Ein derartiger netzseitiger Stromrichter wird als Fundamental Frequency Front End (F3E) bezeichnet. Außerdem weist dieser Frequenzumrichter keinen Zwischenkreiskondensator $C_{ZK}$ mehr auf. Dafür weist dieser Frequenzumrichter eingangsseitig ein Netzfilter auf. Da Kondensatoren nur auf der Netzseite liegen, d.h., dem Frequenzumrichter vorgeschaltet sind, wird der Netzstrom als Messgröße nicht benötigt, da der durch schnelle Netzspannungswiederkehr hervorgerufene Ladestrom den Frequenzumrichter nicht belastet. Zur Steuerung des F3E wird die Zwischenkreisspannung $U_{ZK}$ direkt gemessen, die direkt zur Bearbeitung der für den Betrieb maßgeblichen Netzspannungsqualität benutzt wird.

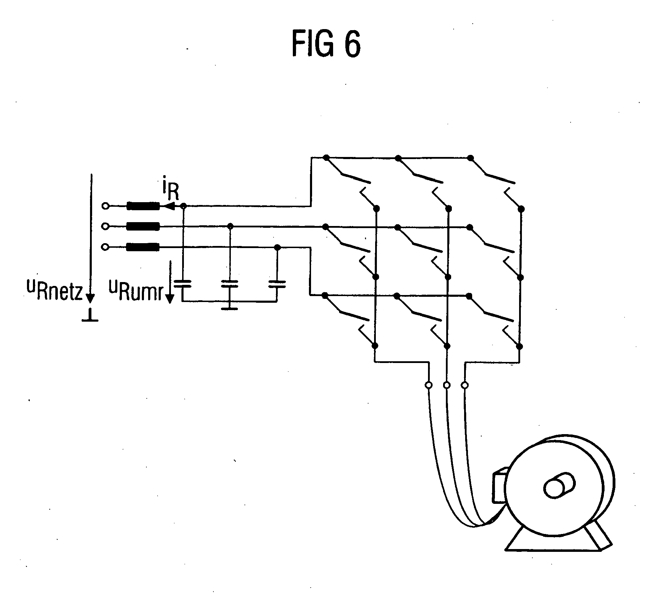

Eine weitere Umrichtertopologie ist in der FIG 6 näher dargestellt. Bei dieser Umrichtertopologie handelt es sich um einen Matrixumrichter. Beim Matrixumrichter wird die Spannung der netzseitigen Kondensatoren gemessen. Die Netzfilterdrosseln sind jeweils so klein, dass eine an ihnen abfallende Spannung vernachlässigbar ist. Die Kondensatorspannung wird daher für die Ermittlung des Risikos für einen störungsfreien Betrieb durch Netzfehler analysiert. Der Netzstrom wird nicht benötigt, da der Umrichterstrom über den Motorstrom und ein Pulsmuster eingeprägt ist.

Mit diesem erfindungsgemäßen Verfahren ist ein an ein speisendes Netz angeschlossener Frequenzumrichter nun in der Lage, auch ohne großen Aufwand eine Kennziffer für die Qualität des speisenden Netzes zu ermitteln, wodurch dann das Risiko für einen störungsbehafteten Betrieb angegeben werden kann. Dadurch wird die Gefahr von Gerätestörungen oder Ausfällen infolge von Netzstörungen erkannt, noch bevor es zu Betriebsunterbrechung kommt. Die Anzahl der Ausfälle mit den damit verbundenen Nachteilen wie Kosten und Imageverlust wird dadurch reduziert.

**Patentansprüche**

1. Verfahren zur Ermittlung einer Kennziffer für die Qualität eines einen Frequenzumrichter (2) speisenden Netzes (18), wobei während des Betriebes dieses Frequenzumrichters (2) eine Zwischenkreisspannung ($U_{ZK}$) fortlaufend gemessen und ein netzseitiger Zwischenkreisstrom ($i_{ZKnetz}$) fortlaufend ermittelt werden, wobei diese Messgrößen ($U_{ZK}$, $i_{ZKnetz}$) jeweils nicht linear gewichtet und anschließend integriert werden und wobei diese aufbereiteten Messgrößen zu einer Kennzahl ($K_{netz}$) aufaddiert werden, die in eine Kennziffer umgerechnet wird.

2. Verfahren nach Anspruch 1,
   **dadurch gekennzeichnet, dass** bei Unterschreitung einer vorbestimmten Kennziffer eine entsprechende Meldung generiert wird.

3. Verfahren nach Anspruch 1,
   **dadurch gekennzeichnet, dass** der netzseitige Zwischenkreisstrom ($i_{ZKnetz}$) in Abhängigkeit einer gemessenen Zwischenkreisspannung ($U_{ZK}$) und eines ermittelten motorseitigen Zwischenkreisstromes ($i_{ZKmotor}$) gemäß folgender Gleichung:

$$i_{ZKnetz} = C_{ZK} \cdot dU_{ZK}/dt + i_{ZKmotor}$$

   berechnet wird.

4. Verfahren nach Anspruch 3,
   **dadurch gekennzeichnet, dass** der motorseitige Zwischenkreisstrom ($i_{ZKmotor}$) gemessen wird.

5. Verfahren nach Anspruch 3,
   **dadurch gekennzeichnet, dass** der motorseitige Zwischenkreisstrom ($i_{ZKmotor}$) in Abhängigkeit einer gemessenen Zwischenkreisspannung ($U_{ZK}$) und einer berechneten Motorleistung ($P_{motor}$) gemäß folgender Gleichung:

$$i_{ZKmotor} = P_{motor}/U_{ZK}$$

   berechnet wird.

6. Verfahren nach Anspruch 5,
   **dadurch gekennzeichnet, dass** die Motorleistung ($P_{motor}$) in Abhängigkeit gemessener Motorströme ($i_1, i_2, i_3$) und vorbestimmter Motorspannungen ($u_1, u_2, u_3$) gemäß folgender Gleichung:

$$P_{motor} = u_1 \cdot i_1 + u_2 \cdot i_2 + u_3 \cdot i_3$$

   berechnet wird.

**Claims**

1. Method for determination of a characteristic factor for the quality of a mains system (18) feeding a frequency converter (2), with an intermediate-circuit voltage ($U_{ZK}$) being measured continuously, and a mains-side intermediate-circuit current ($i_{ZKmains}$) being determined continuously during operation of this frequency converter (2), with these measurement variables ($U_{ZK}$, $i_{ZKmains}$) in each case not being linearly weighted and then integrated, and with these preprocessed measurement variables being added up to a characteristic factor ($K_{mains}$), and being converted to a characteristic factor.

2. Method according to Claim 1,
   **characterized in that**
   an appropriate message is generated if a predetermined characteristic factor is undershoot.

3. Method according to Claim 1,
   **characterized in that**
   the mains-side intermediate-circuit current ($i_{ZKmains}$) is calculated as a function of a measured intermediate-circuit voltage ($U_{ZK}$) and of a determined motor-side intermediate-circuit current ($i_{ZKmotor}$) using the following equation:

$$i_{ZKmains} = C_{ZK} \cdot dU_{ZK}/dt + i_{ZKmotor}.$$

4. Method according to Claim 3,
   **characterized in that**
   the motor-side intermediate-circuit current ($i_{ZKmotor}$) is measured.

5. Method according to Claim 3,
   **characterized in that**
   the motor-side intermediate-circuit current ($i_{ZKmotor}$) is calculated as a function of a measured intermediate-circuit voltage ($U_{ZK}$) and of a calculated motor power ($P_{motor}$) using the following equation:

$$i_{ZKmotor} = P_{motor}/U_{ZK}.$$

6. Method according to Claim 5,
   **characterized in that**
   the motor power ($P_{motor}$) is calculated as a function of the measured motor currents ($i_1, i_2, i_3$) and of predetermined motor voltages ($u_1, u_2, u_3$) using the following equation:

$$P_{motor} = u_1 \cdot i_1 + u_2 \cdot i_2 + u_3 \cdot i_3.$$

**Revendications**

1. Procédé de détermination d'un chiffre caractéristique pour la qualité d'un réseau ( 18 ) alimentant un convertisseur ( 2 ) de fréquences dans lequel, pendant que ce convertisseur de fréquences fonctionne, on mesure en continu une tension ( $U_{ZK}$ ) de circuit intermédiaire et on détermine en continu un courant ( $i_{KZnetz}$ ) de circuit intermédiaire côté réseau, ces grandeurs ( $U_{ZK}$, $i_{ZKnetz}$ ) de mesure étant pondérées respectivement d'une manière non linéaire et ensuite intégrées et ces grandeurs de mesures traitées étant sommées en un nombre ( $K_{netz}$ ) caractéristique, qui est recalculé en un chiffre caractéristique.

2. Procédé suivant la revendication 1,
   **caractérisé en ce que**, si on passe en dessous d'un chiffre caractéristique déterminé à l'avance, on produit un message correspondant.

3. Procédé suivant la revendication 1,
   **caractérisé en ce que** l'on calcule le courant ( $i_{ZKnetz}$ ) de circuit intermédiaire côté réseau en fonction d'une tension ( $U_{ZK}$ ) de circuit intermédiaire mesurée et d'un courant ( $i_{ZKmotor}$ ) de circuit intermédiaire côté moteur déterminé selon l'équation suivants :

$$i_{ZKnetz} = C_{ZK} \cdot dU_{ZK}/dt + i_{ZKmotor}$$

**4.** Procédé suivant la revendication 3, **caractérisé en ce que** l'on mesure le courant ( $i_{ZKmotor}$ ) de circuit intermédiaire côté moteur.

**5.** Procédé suivant la revendication 3,
   **caractérisé en ce que** l'on calcule le courant ( $i_{ZKmotor}$ ) du circuit intermédiaire côté moteur en fonction d'une tension ( $U_{ZK}$ ) de circuit intermédiaire mesurée et d'une puissance ( $P_{motor}$ ) du moteur calculée selon l'équation suivants :

$$i_{ZKmotor} = P_{motor}/U_{ZK}$$

**6.** Procédé suivant la revendication 5,
   **caractérisé en ce que** l'on calcule la puissance ( $P_{motor}$ ) du moteur en fonction de courants ( $i_1, i_2, i_3$ ) du moteur mesurés et de tensions ( $u_1, u_2, u_3$ ) du moteur déterminées à l'avance selon l'équation suivants :

$$P_{motor} = u_1 \cdot i_1 + u_2 \cdot i_2 + u_3 \cdot i_3$$

# FIG 1

EP 1 892 820 B1

## FIG 2

$x_j$ → $F_j(x_j)$ [22] → [24] → $b_i$ [26] → $K_{netz}$ [28]

$x_{j+1}$ → $F_{j+1}(x_{j+1})$ → → $b_{i+1}$

20

## FIG 3

$F(x)$

$x$

FIG 4

FIG 5

# FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19924550 A1

- EP 0370500 A